## Europäisches Patentamt
## European Patent Office
## Office européen des brevets

(19)

(11) Veröffentlichungsnummer: **0 057 879**
**B1**

(12) # EUROPÄISCHE PATENTSCHRIFT

(45) Veröffentlichungstag der Patentschrift:
17.04.85

(51) Int. Cl.⁴: **H 02 G 3/06**, H 02 G 3/04

(21) Anmeldenummer: **82100658.2**

(22) Anmeldetag: **30.01.82**

(54) **Kabelbahn als Träger von elektrischen Kabeln.**

(30) Priorität: **04.02.81 DE 3103736**

(43) Veröffentlichungstag der Anmeldung:
**18.08.82 Patentblatt 82/33**

(45) Bekanntmachung des Hinweises auf die Patenterteilung:
**17.04.85 Patentblatt 85/16**

(84) Benannte Vertragsstaaten:
**AT BE CH FR GB IT LI NL SE**

(56) Entgegenhaltungen:
**FR - A - 2 408 748**
**GB - A - 476 870**
**NL - A - 7 808 478**
**US - A - 2 905 285**
**US - A - 2 905 416**
**US - A - 3 126 444**
**US - A - 3 321 571**
**US - A - 4 040 449**

(73) Patentinhaber: **Riepe, Hans, Im Kungelsiepen 16,
D-5750 Menden 2 (DE)**

(72) Erfinder: **Riepe, Hans, Im Kungelsiepen 16,
D-5750 Menden 2 (DE)**

(74) Vertreter: **Patentanwaltsbüro Cohausz & Florack,
Postfach 14 01 47, D-4000 Düsseldorf 1 (DE)**

## Beschreibung

Die Erfindung betrifft eine Kabelbahn als Träger von elektrischen Kabeln, bestehend aus etwa U-förmig profilierten rinnenförmigen Teilstücken, beispielsweise aus Stahlblech, deren Schenkel an ihren Längsrändern umgebördelt sind und die jeweils an einem Endteil zur Bildung eines muffartigen Verbindungsstückes etwa um die Materialstärke abgekröpft sind, in welches Verbindungsstück das unverkröpfte Endteil eines weiteren Teilstückes einlegbar und durch Befestigungsmittel in dieser Lage fixierbar ist.

Eine derartige Kabelbahn ist aus der Praxis bekannt. Dabei sind die Längsränder nach innen umgebördelt, während sie im Bereich des muffenartigen Verbindungsstückes weggeschnitten sind.

Als Befestigungsmittel zweier vorbekannter Teilstücke dienen üblicherweise Verbindungsschrauben nebst Muttern.

Hiervon ausgehend liegt der Erfindung die Aufgabe zugrunde, eine Kabelbahn der eingangs beschriebenen Art zu schaffen, bei der auf separate, also verlierbare, Befestigungsmittel verzichtet werden kann und dennoch eine Kabelbahn mit außerordentlich stabilen Verbindungsstellen herzustellen ist.

Die Aufgabe wird erfindungsgemäß dadurch gelöst, daß die Schenkel an ihren Längsrändern nach außen umgebördelt sind, daß die Bördelung auch am abgekröpften Verbindungsstück vorgesehen ist, wobei die Bördelung in diesem Bereich von dem umgebördelten Rand des weiteren Teilstückes übergreifbar ist, und daß als Befestigungsmittel aus dem umgebördelten Rand des weiteren Teilstückes im die Bördelung des Verbindungsstückes übergreifenden Bereich Lappen ausgeschnitten sind, die um die Bördelung des Verbindungsstückes biegbar sind, welches im Eingriffsbereich der Lappen angeordnete in Biegerichtung offene Ausnehmungen aufweist.

Durch diese Maßnahmen wird ein praktisch nahtloser Übergang an den Anschlußstellen der Kabelbahn erreicht, wobei zudem auf separate Befestigungsmittel verzichtet werden kann. Als Befestigungsmittel dienen lediglich die am einen Teilstückende im Bereich des umgebördelten Randes angeschnittenen Lappen, die um den Bördelrand des Verbindungsstückes herumgebogen, in der Endstellung in den Ausnehmungen des Verbindungsstückes liegen. Damit ist sowohl eine sichere Verbindung in Längsrichtung der Kabelbahn als auch quer dazu erreicht. Die Kabelbahnteilstücke sind üblicherweise etwa 3 Meter lang, während das Verbindungsstück etwa 10 cm lang ist.

Das Verbindungsstück weist vorteilhafterweise jeweils zwei Ausnehmungen im rechten bzw. linken umgebördelten Rand auf, wobei das entsprechende andere Teilstückende die entsprechende Anzahl von Lappen aufweist. Die Abkröpfung gleicht den Höhenunterschied zwischen den Enden der beiden rinnenförmigen Teilstücke aus, so daß der Rinneninnenraum der Kabelbahn praktisch vorsprungfrei ist. Das Einsetzen des weiteren Teilstückes in das Verbindungsstück kann vorteilhafterweise durch eine Aufeinander-Zubewegung quer zur Längserstreckung der Kabelbahn erfolgen, so daß auch die Montage bei engem Raum in Längsrichtung bzw. die Demontage einzelner Teile bei einer bereits verlegten Kabelbahn möglich ist.

Die Bördelung des Verbindungsstückes ist sowohl seitlich als auch quer zur Längserstreckung der Kabelbahn zurückversetzt, so daß sie einerseits vom umgebördelten Rand des weiteren Teilstückes übergriffen werden kann und andererseits ein vorsprungfreier Übergang zwischen dem umgebördelten Rand des mit dem Verbindungsstück einstückigen Teilstückes und dem weiteren Teilstück erreichbar ist.

Eine noch sicherere Verbindung der Teilstücke ist dadurch zu erreichen, daß in den Wand- und/oder Bodenteilen des Verbindungsstückes Lochungen vorgesehen sind, um deren Ränder weitere am weiteren Teilstück angeschnittene Lappen als Befestigungsmittel biegbar sind.

Zur Erleichterung des Zusammenfügens der erfindungsgemäß ausgebildeten Teilstücke wird vorgeschlagen, daß die Schenkel jedes Teilstückes einschließlich des Verbindungsstückes divergierend ausgebildet sind.

Durch diese Ausbildung wird zudem erreicht, daß die Teilstücke ineinander stapelbar sind, so daß ein erheblich geringerer Raumbedarf bei der Lagerung bzw. beim Transport erforderlich ist.

Kabelbahnen mit divergierenden Schenkeln sind an sich aus DE-U-7 838 561 bekannt.

Damit der umgebördelte Rand als Stapelrand dienen kann, bei dem eine ebene Stapelfläche erwünscht ist, wird vorgeschlagen, daß der umgebördelte Rand vom Schenkel ausgehend zunächst parallel zur Bodenfläche verlaufend nach außen gebogen und nachfolgend winklig oder gekrümmt um mehr als 90° gebördelt ist.

Auch kann vorteilhaft sein, daß ein flacher, U-förmig profilierter Deckel über den umgebördelten Rand klemmbar ist.

Derartige Deckel sind an sich aus o. g. Gebrauchsmusterschrift bekannt.

Weiterhin ist es vorteilhaft, wenn zwischen Deckel und Rand ein elastischer Dichtstreifen angeordnet ist.

Dieses Merkmal ist insbesondere mit dem Merkmal des Anspruchs 4 in Kombination vorteilhaft. Es wird nämlich damit eine ebene Dichtfläche zwischen umgebördeltem Rand und Deckel erreicht.

Zudem kann vorgesehen sein, daß im parallel zum Boden verlaufenden Bereich des umgebördelten Randes in Längsrichtung hintereinander und mit Abstand voneinander Löcher vorgesehen sind, daß der Deckel mit zu diesen deckungsgleichen Löchern versehen ist und Befestigungsschrauben durch diese Löcher hindurchgeschraubt sind.

Ein weiteres vorteilhaftes Merkmal wird darin gesehen, daß der abgekantete Deckelrand in einer nach außen gerichteten, leistenförmigen Handhabe ausläuft.

Die Erfindung wird nachstehend anhand eines Ausführungsbeispiels näher erläutert. Es zeigt

Fig. 1 eine Kabelbahn in schematischer Seitenansicht, wobei der Zusammenbau schrittweise dargestellt ist,

Fig. 2 ein Teilstück einer Kabelbahn von oben gesehen,

Fig. 3 desgleichen in Vorderansicht, wobei das Verbindungsstück vorn liegt,

Fig. 4 einen Schnitt durch die Verbindungsstelle zweier Teilstücke (teilweise dargestellt),

Fig. 5 die schematische Darstellung zweier ineinandergestapelter Teilstücke,

Fig. 6 ein Teilstück mit übergeschnapptem Deckel in schematischer Darstellung,

Fig. 7 eine Variante des Teilstückes, schematisch dargestellt.

Die Kabelbahn besteht aus einer Vielzahl von etwa U-förmig profilierten rinnenförmigen Teilstücken 1, die beispielsweise aus feuerverzinktem Stahlblech gefertigt sind.

Die Schenkel 2 der Teilstücke 1 divergieren, wobei sie mit dem Boden 3 einen Winkel von etwa 6° bilden. Die Schenkel 2 sind an ihren Längsrändern 4 nach außen umgebördelt.

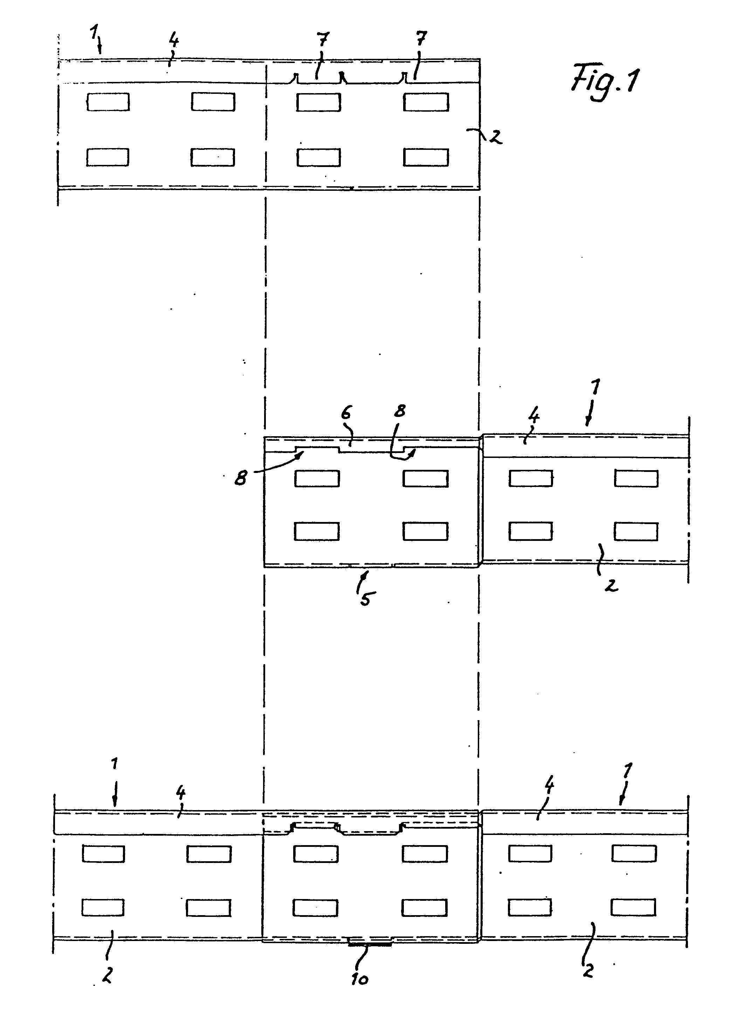

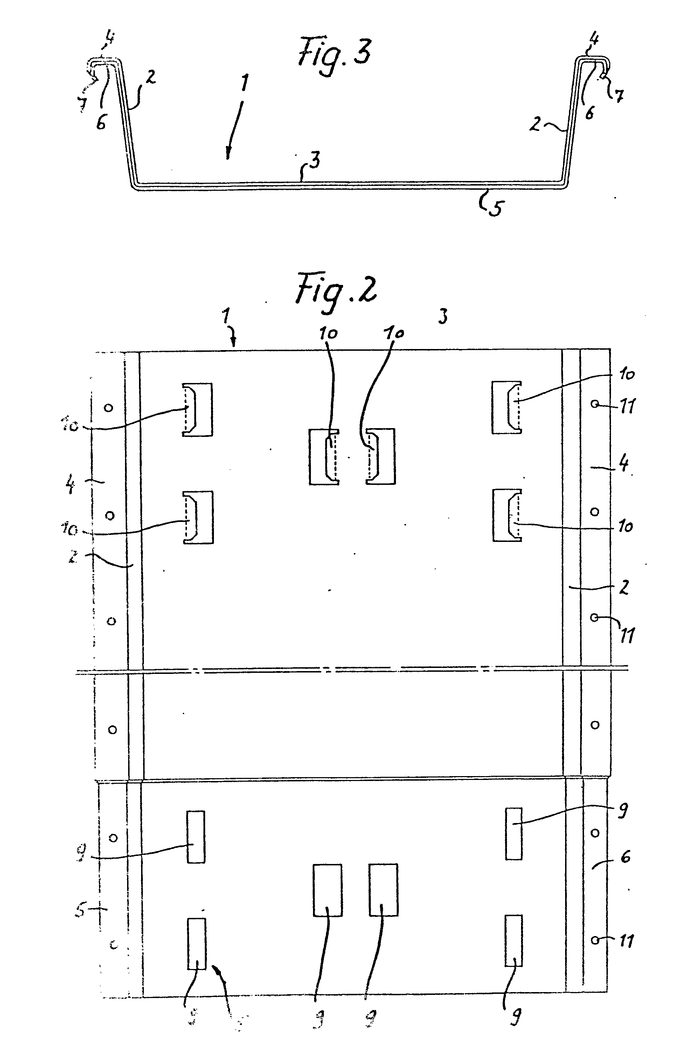

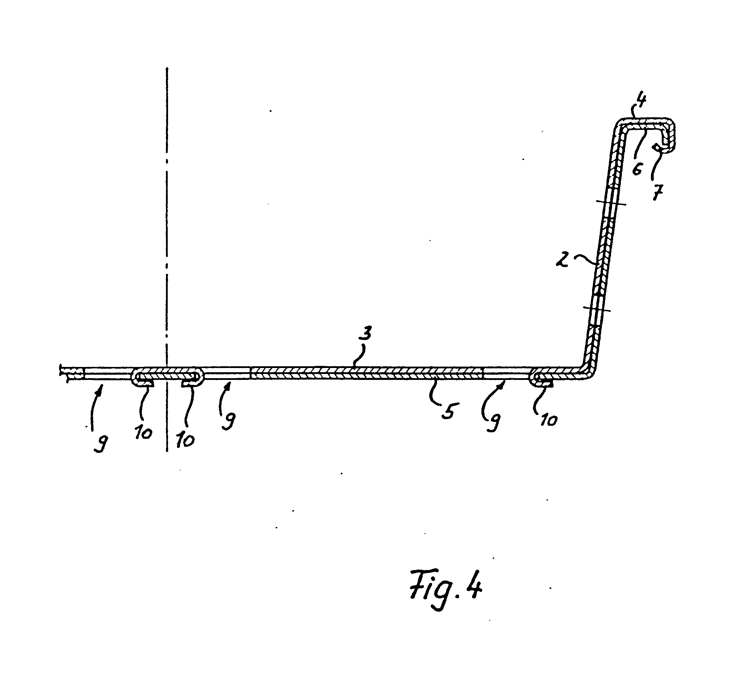

Zur Bildung eines muffenartigen Verbindungsstückes 5 ist jedes Teilstück an einem Ende etwa um die Materialstärke abgekröpft, wobei die Abkröpfung sowohl hinsichtlich des Bodenteiles als auch hinsichtlich der Schenkelteile erfolgt. Auch im Bereich des Verbindungsstückes 5 verläuft eine Bördelung 6, die in der Weise schmal bemessen ist, daß sie vom umgebördelten Längsrand 4 eines weiteren Teilstückes 1 übergriffen werden kann. Dies ist beispielsweise in den Fig. 2 bis 4 deutlich gezeigt. Das Einlegen eines weiteren Teilstückes 1 in das Verbindungsstück 5 ist in Fig. 1 anschaulich dargestellt. Zur Fixierung der nach dem Einlegen nur losen Verbindung sind als Befestigungsmittel aus dem umgebördelten Rand des weiteren Teilstückes 1 in dem Bereich, der die Bördelung 6 des Verbindungsstückes 5 übergreift, jeweils zwei Lappen 7 angeschnitten, während die Bördelung 6 im Eingriffsbereich dieser Lappen 7 ausgeklinkte Ausnehmungen 8 aufweist. Die Lappen 7 werden beispielsweise mit einer Kneifzange aus der Lage gemäß Fig. 1 oben in die Lage gemäß Fig. 1 unten gebogen, wie dies auch in Fig. 4 besonders deutlich dargestellt ist.

Durch die besondere Anordnung und Ausbildung der Lappen 7 und der Ausnehmungen 8 ist eine stabile Verbindung zwischen den beiden Teilstücken hergestellt, die sowohl in Längsrichtung der Teilstücke als auch quer dazu zumindest ausreichend belastbar ist.

Zur weiteren Stabilisierung der Verbindung sind im Boden des Verbindungsstückes 5 rechteckige Lochungen 9 ausgeschnitten, um deren Längsränder weitere aus dem Boden 3 des Teilstückes 1 freigeschnittene Lappen 10 biegbar.

Die Lappen 10 liegen ursprünglich, d. h. nach der Fertigung der Teilstücke 1 in der Ebene des Bodens 3 und werden erst beim Zusammenbau mehrerer Teilstücke 1 aus der ursprünglichen Ebene um 180° herumgebogen, so daß sie außen am Boden des Verbindungsstückes 5 anliegen. Dies ist besonders deutlich aus Fig. 4 ersichtlich.

Wie in allen Figuren mit Ausnahme von Fig. 7 gezeigt, verläuft der umgebördelte Längsrand 4 bzw. die Bördelung 6 vom Schenkel 2 ausgehend zunächst parallel zur Bodenfläche und ist dann noch weiter umgebogen.

Es wird so ein ebener Bereich erzeugt, der einerseits zur Aufnahme von Befestigungslöchern 11 dient und andererseits eine saubere Anlagefläche für evtl. vorzusehende Dichtstreifen bildet.

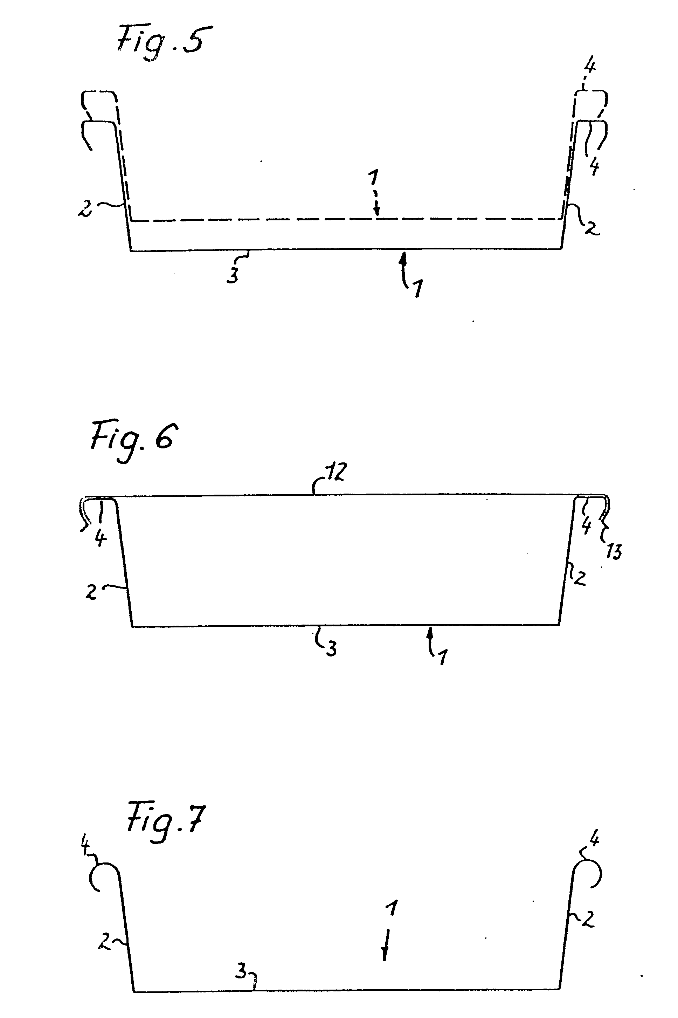

Wie insbesondere aus Fig. 6 ersichtlich kann ein flacher, U-förmig profilierter Deckel 12 über den umgebördelten Längsrand 4 geclipst werden, wobei der abgekantete Deckelrand federnd über den Längsrand 4 greift und vorzugsweise in einer nach außen gerichteten, leistenförmigen Handhabe 13 ausläuft. Es ist auch möglich, den Deckel 12 mittels Befestigungsschrauben am Längsrand 4 zu befestigen, welche Befestigungsschrauben in die Löcher 11 eingeschraubt werden.

## Patentansprüche

1. Kabelbahn als Träger von elektrischen Kabeln, bestehend aus etwa U-förmig profilierten rinnenförmigen Teilstücken (1), beispielsweise aus Stahlblech, deren Schenkel (2) an ihren Längsrändern (4) umgebördelt sind und die jeweils an einem Endteil zur Bildung eines muffenartigen Verbindungsstückes etwa um die Materialstärke abgekröpft sind, in welches Verbindungsstück das unverkröpfte Endteil eines weiteren Teilstückes einlegbar und durch Befestigungsmittel in dieser Lage fixierbar ist, dadurch gekennzeichnet, daß die Schenkel (2) an ihren Längsrändern (4) nach außen umgebördelt sind, daß die Bördelung (6) auch am abgekröpften Verbindungsstück (5) vorgesehen ist, wobei die Bördelung (6) in diesem Bereich von dem umgebördelten Rand (4) des weiteren Teilstückes (1) übergreifbar ist, und daß als Befestigungsmittel aus dem umgebördelten Rand (4) des weiteren Teilstückes (1) im die Bördelung (6) des Verbindungsstückes (5) übergreifenden Bereich Lappen (7) ausgeschnitten sind, die um die Bördelung (6) des Verbindungsstückes (5) biegbar sind, welches im Eingriffsbereich der Lappen (7) angeordnete in Biegerichtung offene Ausnehmungen (8) aufweist.

2. Kabelbahn nach Anspruch 1, dadurch gekennzeichnet, daß in den Wand- und/oder Bodenteilen des Verbindungsstückes (5) Lochungen (9) vorgesehen sind, um deren Ränder weitere am weiteren Teilstück (1) angeschnittene Lappen (10) als Befestigungsmittel biegbar sind.

3. Kabelbahn nach Anspruch 1 oder 2, dadurch gekennzeichnet, daß die Schenkel (2) jedes Teilstückes (1) einschließlich des Verbindungsstückes (5) divergierend ausgebildet sind.

4. Kabelbahn nach einem der Ansprüche 1 bis 3, dadurch gekennzeichnet, daß der umgebördelte Rand (4) vom Schenkel (2) ausgehend zunächst parallel zur Bodenfläche verlaufend nach außen gebogen und nachfolgend winklig oder gekrümmt um mehr als 90° gebördelt ist.

5. Kabelbahn nach einem der Ansprüche 1 bis 4, dadurch gekennzeichnet, daß ein flacher, U-förmig profilierter Deckel (12) über den umgebördelten Rand (4) klemmbar ist.

6. Kabelbahn nach einem der Ansprüche 1 bis 5, dadurch gekennzeichnet, daß zwischen Deckel (12) und Rand (4) ein elastischer Dichtstreifen angeordnet ist.

7. Kabelbahn nach einem der Ansprüche 1 bis 6, dadurch gekennzeichnet, daß im parallel zum Boden (3) verlaufenden Bereich des umgebördelten Randes (4) in Längsrichtung hintereinander und mit Abstand voneinander Löcher (11) vorgesehen sind, daß der Deckel (12) mit zu diesen deckungsgleichen Löchern versehen ist und Befestigungsschrauben durch diese Löcher hindurchgeschraubt sind.

8. Kabelbahn nach einem der Ansprüche 1 bis 7, dadurch gekennzeichnet, daß der abgekantete Deckelrand in einer nach außen gerichteten, leistenförmigen Handhabe (13) ausläuft.

characterised in that the arms (2) of each section (1) including the connection component (5) are formed to be divergent.

4. A cable track as claimed in one of claims 1 to 3, characterised in that the flanged edge (4) of the arms (2) extends in the first instance parallel to the base surface in an outwardly bent manner and is subsequently flanged in an angled or bent manner by more than 90°.

5. A cable track as claimed in one of claims 1 to 4, characterised in that a flat, U-shaped, profiled cover (12) may be clamped over the flanged edge (4).

6. A cable track as claimed in one of claims 1 to 5, characterised in that a resilient sealing strip is disposed between the cover (12) and the edge (4).

7. A cable track as claimed in one of claims 1 to 6, characterised in that in the area of the flanged edge (4) extending parallel to the base (3) apertures (11) are provided after one another in the longitudinal direction and are spaced from one another, and in that the cover (12) is provided with holes which match the apertures (11) and in that fastening screws are screwed through these holes.

8. A cable track as claimed in on of claims 1 to 7, characterised in that the bevelled cover edge extends into an outwardly directed strip-like handle.

## Claims

1. A cable track acting as a support for electrical cables, comprising approximately U-shaped profiled channel-shaped sections (1), for example of sheet steel, whose arms (2) are flanged on their longitudinal edges (4) and are bent at an angle by approximately the material thickness at a respective end portion in order to form a sleeve-shaped connection component, in which component the unbent end portion of a further section may be inserted and fastened in this position by fastening means, characterised in that the arms (2) are outwardly flanged on their longitudinal edges (4), in that the flanging is also provided on the bent connection component (5), wherein the flanging (6) may be overlapped in this area by the flanged edge (4) of the further section (1), and in that lugs (7) are cut, as fastening means, from the flanged edge (4) of the further section (1) in the area overlapping the flanging (6) of the connection component (5), which lugs (7) may be bent about the flanging (6) of the connection component (5) which comprises open recesses (8) disposed in the bending direction in the engagement area of the lugs (7).

2. A cable track as claimed in claim 1, characterised in that perforations (9) are provided in the wall and/or base portions of the connection component (5), wherein further lugs (10) cut from the further section (1) may be bent about the edges of these perforations as fastening means.

3. A cable track as claimed in claims 1 or 2,

## Revendications

1. Voie de câbles formant support de câbles électriques, constituée de tronçons (1) profilés en forme de gouttière sensiblement en forme de U, par exemple en tôle d'acier, dont les branches (2) sont rabattues sur leurs bords longitudinaux (4) et qui sont chacun coudés à une portion d'extrémité sur environ l'épaisseur de matière pour former une pièce de liaison du type manchon, la portion d'extrémité non coudée de ladite pièce de liaison pouvant être logée dans un autre tronçon et être fixée dans cette position par des moyens de fixation, caractérisée par le fait que les branches (2) sont rabattues vers l'extérieur sur leurs bords longitudinaux (4), que le coude (6) est également prévu sur la pièce de liaison (5) coudée, le coude (6) pouvant être recouvert dans cette zone par le bord rabattu (4) de l'autre tronçon (1), et des languettes (7) sont découpées en tant que moyen de fixation dans le bord rabattu (4) de l'autre tronçon (1) dans la zone recouvrant le coude (6) de la pièce de liaison (5), ces languettes (7) pouvant être pliées autour du coude (6) de la pièce de liaison (5) qui présente des évidements (8) disposés dans la zone de prise des languettes (7) et ouverts en direction de pliage.

2. Voie de câbles selon la revendication 1, caractérisée par le fait que des perforations (9) sont prévues dans les portions de paroi, et/ou de fond de la pièce de liaison (5), d'autres languettes (10) découpées dans l'autre tronçon (1) pouvant être pliées, en tant que moyen de fixation, autour des bords de ces perforations.

3. Voie de câbles selon l'une des revendications 1 et 2, caractérisée par le fait que les branches (2) de chaque tronçon (1), y compris la pièce de liaison (5), sont construites divergentes.

4. Voie de câbles selon l'une des revendications 1 à 3, caractérisée par le fait que le bord rabattu (4), en partant de la branche (2), s'étend d'abord parallèlement à la surface du fond en étant plié vers l'extérieur et est ensuite rabattu angulairement ou coudé de plus de 90°.

5. Voie de câbles selon l'une des revendications 1 à 4, caractérisée par le fait qu'un couvercle profilé plat en forme de U (12) peut être serré sur le bord rabattu (4).

6. Voie de câbles selon l'une des revendications 1 à 5, caractérisée par le fait qu'une bande d'étanchéité élastique est disposée entre le couvercle (12) et le bord (4).

7. Voie de câbles selon l'une des revendications 1 à 6, caractérisée par le fait que des trous (11) sont prévus, les uns derrière les autres en direction longitudinale et à distance les uns des autres, dans la zone du bord rabattu (4) s'étendant parallèlement au fond (3), le couvercle (12) est muni de trous coincidents à ceux-ci et des vis de fixation sont vissées à travers ces trous.

8. Voie de câbles selon l'une des revendications 1 à 7, caractérisée par le fait que le bord de couvercle replié s'étend en une prise (13) dirigée vers l'extérieur et en forme de rebord.

Fig.1

Fig. 3

Fig. 2

Fig.4

**Fig.5**

**Fig.6**

**Fig.7**